(19) Europäisches Patentamt
European Patent Office
Office européen des brevets

(11) **EP 2 197 386 B1**

(12) **EUROPEAN PATENT SPECIFICATION**

(45) Date of publication and mention of the grant of the patent:
**03.05.2017 Bulletin 2017/18**

(21) Application number: **08832621.0**

(22) Date of filing: **18.09.2008**

(51) Int Cl.:
***A61C 8/00*** (2006.01)

(86) International application number:
**PCT/US2008/076819**

(87) International publication number:
**WO 2009/039254 (26.03.2009 Gazette 2009/13)**

(54) **SCREW FOR A DENTAL IMPLANT SYSTEM HAVING IMPROVED STABILITY**

SCHRAUBE FÜR EIN ZAHNIMPLANTATSYSTEM MIT VERBESSERTER STABILITÄT

VIS POUR UN SYSTÈME D'IMPLANT DENTAIRE À STABILITÉ AMÉLIORÉE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.09.2007 US 994269 P**

(43) Date of publication of application:
**23.06.2010 Bulletin 2010/25**

(73) Proprietor: **Biomet 3i, LLC**
**Palm Beach Gardens, FL 33410 (US)**

(72) Inventors:
• **TOWSE, Ross, W.**
**Palm City**
**Florida 34990 (US)**
• **GUBBI, Prabhu**
**Jupiter**
**Florida 33478 (US)**

(74) Representative: **Mays, Julie et al**
**Venner Shipley LLP**
**200 Aldersgate**
**London, EC1A 4HD (GB)**

(56) References cited:
**KR-A- 20040 094 077**   **US-A- 5 080 671**
**US-A- 5 711 669**   **US-A- 5 711 669**
**US-A- 5 879 161**   **US-A- 5 879 161**
**US-A1- 2003 224 331**   **US-A1- 2004 191 727**
**US-B1- 6 428 579**   **US-B1- 6 428 579**
**US-B1- 6 447 295**   **US-B1- 6 447 295**

**Description**

BACKGROUND OF THE INVENTION

Field of the Invention

This invention relates to the field of dental implants, more particularly, to the components used in dental implant systems and, most particularly, to the screws which are used to assemble such systems.

Description of Related Art

Dental implants are the subject of many patents and extensive literature. Artificial implants are implanted in the jawbones of patients and used to support replacement teeth. The replacement tooth may be fastened directly to the implant or it may be fastened to an intermediate part, called an abutment. Both the artificial implants and the abutments are typically made of titanium or a titanium alloy. In most systems, small screws are used to connect the parts. The screws which are used to connect the abutment to the implant typically have minor diameters of about 1.4-1.5 mm (0.055-0.059 inch). Retaining screws, which hold the replacement tooth to the abutment part, may have minor diameters of about 1.06-1.15 mm (0.0419-0.0453 inch).

In general, if a metal or alloy is biocompatible and has sufficient strength, it may be used to make screws for dental implant systems. Screws that are made of palladium alloys or titanium alloys have become accepted for dental use. For example, one palladium alloy having sufficient strength includes palladium alloy 8010 (palladium containing 9.5-10.5% gallium, 6.5-7.5% copper, and 1.8-2.2% gold with traces of zinc, iridium, and ruthenium). Meanwhile, commonly used titanium alloys include the alloys Ti Al$_6$ V$_4$ (titanium containing 6% aluminum and 4% vanadium) and Ti 1313 (titanium containing 13% zirconium and 13% niobium). Platinum alloys containing iridium may also have application as dental implant screws.

It will be apparent that when such implanted artificial teeth are used to chew food (mastication), they are subject to significant forces. These forces place loads on the screws holding the tooth and any abutment to the implant. While those screws are intended to prevent the components of the implant system from separating, the mastication loads may cause the contacting surfaces of the components to open slightly on one side of the implant system by bending one or more of the screws. This creates what will be referred to herein as a "microgap," which typically occurs at the interface between the opposed surfaces of the abutment and the implant. Oral fluids may gain access to the interior of the implant system through the microgap, risking infection. Movement of the implant components may also cause the screws to loosen or fail as they are repeatedly stretched and bent.

Screws may be pretensioned to prevent or minimize the separation between the individual components of a dental implant system. As a screw is fully threaded into a prethreaded bore, the screw is tensioned between the engaging threaded surfaces of the screw and the bore, and the abutting surfaces of the screw head and the stationary seating surface around the bore. After the screw head seats on a stationary surface, the tension on the screw increases as the screw is threaded farther into the bore. This tension on the screw produces a force that is commonly referred to as the "preload" of the screw. Thus, "preload" may be defined as the maximum initial force required to reverse out a tightened screw. Preload may also be described as the clamping force.

Classical screw theory relates the degree (angle) of turn of a screw to preload or clamping force by the following simplified equation:

$$\mathbf{F = (P\,\theta/360)K}$$

where:

    **F** = preload or clamped force of the two parts held together by the screw (e.g., the abutment to the implant),
    **P** = pitch of the abutment screw (e.g., 0.4 mm for a typical abutment screw),
    $\theta$ = degree (angle) of turn measured after snugging of screw head against opposed surface (i.e., abutment/implant surfaces are seated together), and
    **K** = spring constant of the screw and joint.

If the degree of turn ($\theta$) is increased, the resulting clamping force (F) is also increased. An increase in the clamping force results in a tighter abutment/implant joint. The tighter joint imparts greater resistance to screw loosening and increases the load required to pry the abutment/implant joint apart. Side loads produced during mastication result in forces that tend to pry the abutment/implant joint apart. Joint prying and fatigue strength are directly related and, thus, the greater the force required to pry the joint, the greater the force required to cause cyclic fatigue failure of the screw.

In general, the fatigue strength of the screw increases as the preload increases because the screw remains more stable when subjected to various loads. The farther a screw is threaded into its bore after seating of the screw head, the greater the preload on the screw, i.e., the greater the force exerted by the inherent resilience (elastic recovery) of the screw itself on the opposing surfaces responsible for the tension on the screw. Advancing movement of the screw into its bore is resisted in part by the friction between the rotating surfaces of the screw and the opposed stationary surfaces, which must be overcome by the applied torque to advance the screw. By reducing the friction between the rotating surfaces of the screw and the opposed stationary surfaces, the preload on the screw can be increased for any applied torque because that torque will cause the screw to be advanced farther into its bore. Accordingly, screws, such as titanium alloy and palladium alloy screws, are often coated with materials, such as gold, silver, polytetrafluoroethylene (Teflon®), and carbon coatings, to improve screw preload properties and thus minimize the possibility of opening microgaps during mastication. Such coatings also increase the corrosion resistance of the screws. Further discussion of coatings for dental implant screws is provided in U.S. Patent No. 6,287,116, issued September 11, 2001. Document US5711669 discloses titanium screws coated or treated with selected biocompatible materials such as gold, silver and polytetrafluoroethylene, which can mount a prosthesis in a dental implant under a high preload without the application of unacceptable torque.

## SUMMARY OF THE INVENTION

Embodiments of the present invention provide a screw for a dental implant system as defined in claim 1. Preferred embodiments are according to the dependent claims.

These and other aspects of the present invention will become more apparent from the following detailed description of the preferred embodiments of the present invention when viewed in conjunction with the accompanying drawings.

## BRIEF DESCRIPTION OF THE DRAWINGS

FIG. 1 is a side elevation view, partially in section, of an embodiment of a dental implant abutment system that may employ an improved abutment screw according to the present concepts.
FIG. 2 is an exploded view of the assembly shown in FIG. 1.

## DETAILED DESCRIPTION

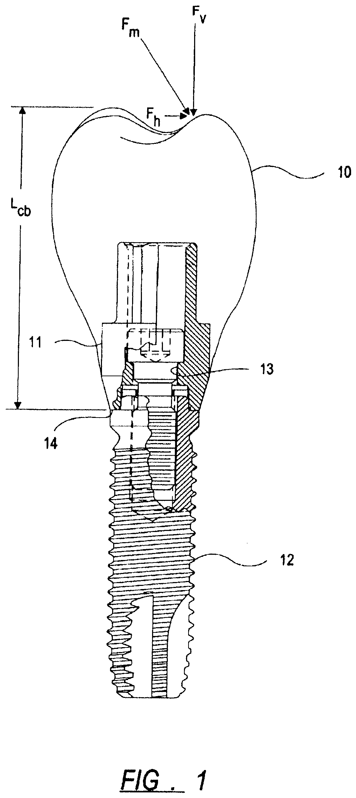

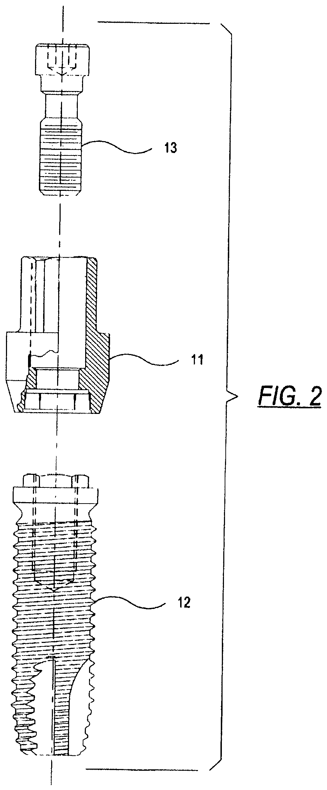

FIGS. 1 and 2 illustrate an embodiment of a dental implant abutment system that may employ an improved abutment screw according to aspects of the present invention. In particular, FIGS. 1 and 2 show an artificial tooth 10 formed on an abutment 11 which is secured to an implant 12 with an abutment screw 13. As described further below, the screw 13 may be formed according to aspects of the present invention to provide improved strength and preload characteristics.

Reference may also be made to FIG. 1 to illustrate the potential problems that may be prevented or minimized by a screw 13 that is formed according to aspects of the present invention. When an artificial tooth is employed in chewing food, the forces exerted on the tooth are not all aligned with the vertical axis on which the tooth was assembled. Forces are applied at various angles off the vertical axis, producing corresponding stresses on the screw or screws which hold the implant system together. If the applied force exceeds the strength of a screw, the screw can bend and open a microgap where the implant 12 meets the abutment 11. Repeated bending of the screw can lead to breakage. Also, fluids from the mouth may enter the microgap and lead to infection.

As shown in FIG. 1, the threaded portion of the screw 13 engages corresponding threads in a bore inside the implant 12. When the screw 13 is tightened, it is placed under tension by applying a predetermined drive torque to the screw. This application of drive torque produces a preload on the screw.

When the forces exerted in mastication exceed the preload on the screw, the screw 13 will bend under stress and allow a microgap to open. In FIG. 1, such a gap could open at the junction 14 where the abutment 11 meets the top of the implant 12. FIG. 1 illustrates an off-axis mastication force $F_m$ exerted on the tooth, and shows that this force may be resolved into a vertical force component $F_v$ and a horizontal force component $F_h$. The bending force exerted on the screw 13 at the junction 14 may be expressed as

$$(F_h)(L_{cb})$$

where $L_{cb}$ is the distance from the top of the tooth to the junction 14.

The resisting force $F_s$ exerted by the pretensioning of the screw 13 may be expressed as

$$(F_s)(W/2)$$

where W is the minor diameter of the threaded portion of the implant 12. If the two forces $F_h$ and $F_s$ are equal so that the screw begins to bend, then

$$(F_s)(W/2) = (F_h)(L_{cb})$$

and

$$F_s = (F_h)(L_{cb})/ (W/2).$$

From this equation, it can be concluded that increasing the resisting force $F_s$ by greater pretensioning of the screw 13 will permit a higher mastication force $F_m$ to be exerted on the tooth before the screw 13 bends and opens a microgap.

Screws used to assemble dental implant systems are typically tightened with a predetermined torque which is great enough to produce a substantial preload on the screw, but not so great as to risk fracturing the metal. Screws that are stronger in terms of torque to failure are better able to accept the application of higher tightening torques and achieve greater preloading. The strength of screws is determined primarily by the substrate metal used.

As described previously, the applied torque must overcome the frictional forces associated with the engagement between the threads of the screw 13 and the implant 12 and with turning the screw head against the seating surface of the abutment 11. As a result, the preload on the screw 13 can be increased for a given applied torque by coating the screw 13 to reduce the friction between the rotating surfaces of the screw and the opposed stationary surfaces.

Accordingly, to achieve higher preloads, it is desirable to employ screws that combine a strong substrate material with an outer coating of friction-reducing material. A stronger substrate material permits greater torques to be applied without causing failure, while the coating permits a higher preload to be obtained for a given applied torque.

The selected combination of the substrate and coating materials provides a screw with many of its performance characteristics. TABLE 1 provides a comparison of screws having various combinations of substrate and coating materials. To generate the data for TABLE 1, screws with the same geometry were examined under equivalent testing conditions. Specifically, the geometry of the screws was equivalent to the geometry of the Gold-Tite™ Hexed Screw, IUNIHG manufactured by BIOMET 3i (Palm Beach Gardens, FL). For preload testing, the screws were tested in combination with 4 mm Certain® Implants also manufactured by BIOMET 3i (Palm Beach Gardens, FL). During the test, the screws were driven into the implant device until initial contact was made by the screw head with the seating surface on the implant device. The screws were then tightened with applied initial torques of 20 Newton-centimeters (N-cm) to preload the screws. The measured average preload values for n = 5 samples are provided in column X of TABLE 1. Furthermore, torque was applied to the screws to measure strength characteristics in terms of torque to failure. The resulting average torque to failure values expressed in N-cm for n = 5 samples are provided in column Y of TABLE 1.

Referring to TABLE 1, Row A provides the test results for titanium alloy screws with a gold coating, and Row B provides the test results for gold/palladium alloy screws with a gold coating. The combination of materials for Rows A and B reflect convention combinations of substrate and coating materials. A comparison of between the test results for Rows A and B demonstrates that the titanium alloy screw has higher strength characteristics in terms of torque to failure, while the gold/palladium screw achieves a higher preload for a given initial torque. As discussed previously, to achieve a higher preload, it is desirable to employ a screw that has a substrate material which permits greater torques to be applied without causing failure and a coating which permits a higher preload for a given applied torque. However, the data from Rows A and B indicates that there is usually a trade-off in performance between these two characteristics. In other words, such conventional combinations of substrate and coating materials are known to provide either a high torque to failure or a high preload for a given applied torque, but not both.

In contrast to systems using conventional combinations of substrate and coating materials, the improved screw described herein employs combinations of materials that provide both a high strength and a high preload for a given applied torque. In particular, such a screw may use a biocompatible stainless steel, such as surgical grade 316L stainless steel, as a substrate material to achieve high strength. Furthermore, the improved screw may apply a material, such as gold, for a coating to reduce friction and permit a high preload for a given applied torque. In view of the characteristics of conventional combinations of substrate and coating materials as shown in Rows A and B of TABLE 1, achieving both high strength and high preload for a given applied torque with embodiments of the present invention could not have been predicted.

Row C of TABLE 1 shows a screw having a substrate material of 316L stainless steel (220 KSI UTS) with no coating. Meanwhile, Row D of TABLE 1 shows a screw having a substrate material of 316L stainless steel (220 KSI UTS) with a 0.5 $\mu$m to 1 $\mu$m coating of electroplated 99.9% gold.

As column Y in TABLE 1 demonstrates, screws employing 316L stainless steel for a substrate material, with or without a coating, have the highest strength. When the 316L stainless steel screw is coated with gold as shown in Row D, the result in column X of TABLE 1 indicates that for the combination the preload at 20 N-cm of initial torque is substantially equal to the value for the gold coated 8010 palladium alloy shown in Row A. Accordingly, unlike conventional material combinations, a 316L stainless steel substrate coated with gold provides both high strength and high preload for a given applied torque.

## TABLE 1

| | | Substrate Material | Coating | X | Y |
|---|---|---|---|---|---|
| **Strength and Preload Characteristics of Various Combinations of Substrate and Coating Materials** | | | | | |
| | | Substrate Material | Coating | Preload at 20 N-cm of Initial Torque (N), n=5 | Torque to Failure (N-cm), n=5 |
| | A | 8010 Palladium Alloy (10% Gallium, 7% copper, 2% gold, 0.5% zinc) | Electroplated 99.9% Gold (0.5 $\mu$m - 1 $\mu$m) | 400 | 39.1 |
| | B | Titanium 6AL-4V ELI | Sputtered 99.9% Gold (0.8 $\mu$m) | 304 | 46.9 |
| | C | 316L Stainless Steel (220 KSI UTS) | None | 235 | 53.9 |
| | D | 316L Stainless Steel (220 KSI UTS) | Electroplated 99.9% Gold (0.5 $\mu$m - 1 $\mu$m) | 387 | 49.2 |

Although TABLE 1 provides testing results for a particular screw geometry, screws of other geometries may be formed from 316L stainless steel. In general, an implant device screw may have the size and shape that makes it compatible with the components of any dental implant system.

Accordingly, the screw 13 shown in FIGS. 1 and 2 are formed from 316L stainless steel and have a gold coating. The screw threads may be machined or stainless steel metal stock may be roll threaded. After being threaded, the screws are coated with substantially pure gold, e.g., electroplated 99.9% gold. The thickness of the gold is limited by the space between the threads, and consequently is on the order of 0.5 $\mu$m to 1 $\mu$m.

Although some embodiments may apply a gold coating to a 316L stainless steel substrate, other embodiments may coat the stainless steel substrate with other malleable materials, including but not limited to silver, carbon, or polytetraflouroethylene (Teflon®) to improve preload. Alternatively, the stainless steel screws may be coated with harder materials such as diamond like carbon (DLC), amorphous diamond, crystalline diamond, or a combination thereof. Like the gold coating, these other coatings provide a low coefficient of friction to improve preload properties. In addition to reducing friction during fastening, the coatings described herein may also improve a screw's corrosion resistance.

Techniques to coat stainless screws may include, but are not limited to, electroplating, sputtering, physical vapor deposition, and chemical vapor deposition. For some techniques, such as electroplating, the metal threads as initially formed may have sufficient surface roughness to permit direct application of the coating to the stainless steel substrate material. However, in other techniques, such as sputtering, an intermediate layer of a biocompatible material such as titanium, may additionally be required to achieve required coating adhesion characteristics.

While various embodiments in accordance with the present invention have been shown and described, it is understood that the invention is not limited thereto. The present invention may be changed, modified and further applied by those skilled in the art. Therefore, this invention is not limited to the detail shown and described previously, but also includes all such changes and modifications.

**Claims**

1. A screw for a dental implant system comprising a surgical grade 316L stainless steel body and a coating of substantially pure gold on the stainless steel body, wherein the coating has a thickness in a range of from 0.5 $\mu$m to about 1 $\mu$m.

2. The screw of claim 1, wherein the coating is applied to an intermediate layer of titanium on the stainless steel body.

3. The screw of claim 1, wherein the stainless steel body an ultimate tensile strength of 1517MPa (220 KSI) and the coating of substantially pure gold is a coating of electroplated 99.9% gold.

4. The screw of claim 1, wherein the coating is applied by electroplating, sputtering, physical vapour deposition, or chemical vapour deposition.

5. A dental implant system comprising a first component and a second component, the first component and the second component being fastened together by the screw of claim 1.

6. The dental implant system of claim 5, wherein the first component is an artificial implant and the second component is an abutment.

7. The dental implant system of claim 6 wherein the coating of substantially pure gold is a coating of 99.9% gold applied by electroplating.

8. The dental implant system of claim 7, wherein the stainless steel body has an ultimate tensile strength of 1517MPa (220 KSI).

**Patentansprüche**

1. Schraube für ein Zahnimplantatsystem, umfassend einen Körper aus Edelstahl 316L mit chirurgischer Qualität und eine Beschichtung aus in Wesentlichem reinem Gold auf dem Edelstahlkörper, wobei die Beschichtung eine stärke im Bereich von 0,5 $\mu$m bis ca. 1 $\mu$m hat.

2. Schraube nach Anspruch 1, wobei die Beschichtung auf eine Zwischenschicht aus Titan auf dem Edelstahlkörper angewendet wird.

3. Schraube nach Anspruch 1, wobei der Edelstahlkörper eine äußerste Zugfestigkeit von 1517 MPa (220 KSI) hat und die Beschichtung aus in Wesentlichem reinem Gold eine Beschichtung aus galvanisch belegtem 99,9 %-igem Gold ist.

4. Schraube nach Anspruch 1, wobei die Beschichtung durch Galvanisierung, Sputtern, physikalische Gasphasenabscheidung oder chemische Gasphasenabscheidung angewendet wird.

5. Zahnimplantatsystem, umfassend eine erste Komponente und eine zweite Komponente, wobei die erste Komponente und die zweite Komponente durch die Schraube nach Anspruch 1 miteinander befestigt werden.

6. Zahnimplantatsystem nach Anspruch 5, wobei die erste Komponente ein künstliches Implantat und die zweite Komponente ein Widerlager ist.

7. Zahnimplantatsystem nach Anspruch 6 wobei die Beschichtung aus im Wesentlichen reinem Gold eine Beschichtung aus 99,9 %-igem Gold ist, die durch Galvanisieren angewendet wird.

8. Zahnimplantatsystem nach Anspruch 7, wobei der Edelstahlkörper eine äußerste Zugfestigkeit von 1517 MPa (220 KSI) hat

**Revendications**

1. Vis pour un système d'implant dentaire comprenant un corps en acier inoxydable 316L de qualité chirurgicale et un revêtement en or sensiblement pur appliqué au corps en acier inoxydable, dans laquelle le revêtement a une épaisseur comprise dans une plage allant 0,5 $\mu$m à environ 1 $\mu$m.

2. Vis selon la revendication 1, dans laquelle le revêtement est appliqué à une couche intermédiaire de titane se trouvant sur le corps en acier inoxydable.

3. Vis selon la revendication 1, dans laquelle le corps en acier inoxydable a une résistance à la traction ultime de 1517 MPa (220 KSI) et le revêtement en or sensiblement pur est un revêtement en or à 99,9 % électroplaqué.

4. Vis selon la revendication 1, dans laquelle le revêtement est appliqué par électroplacage, pulvérisation cathodique, dépôt physique en phase vapeur ou par dépôt chimique en phase vapeur.

5. Système d'implant dentaire comprenant un premier composant et un second composant, le premier composant et le second composant étant fixés l'un à l'autre par la vis selon la revendication 1.

6. Système d'implant dentaire selon la revendication 5, dans lequel le premier composant est un implant artificiel et le second composant est un pilier.

7. Système d'implant dentaire selon la revendication 6, dans lequel le revêtement en or sensiblement pur est un revêtement en or à 99,9 % appliqué par électroplacage.

8. Système d'implant dentaire selon la revendication 7, dans lequel le corps en acier inoxydable a une résistance à la traction ultime de 1517 MPa (220 KSI).

$$F_m \qquad F_v$$

$$F_h$$

$$10$$

$$L_{cb}$$

$$11$$

$$13$$

$$14$$

$$12$$

*FIG . 1*

13

11

_FIG. 2_

12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6287116 B

- US 5711669 A